# EUROPÄISCHE PATENTSCHRIFT

(11) **EP 2 849 259 B1**
(45) Veröffentlichungstag und Bekanntmachung des Hinweises auf die Patenterteilung: **17.05.2017**
(21) Anmeldenummer: 14183872.2
(22) Anmeldetag: 08.09.2014
(51) Int. Cl.: H01M 2/20, H01M 2/30, H01M 10/46, H01M 2/10

(54) **Wiederaufladbare Batterie**
Rechargeable battery
Pile rechargeable

(30) Priorität: 16.09.2013 DE 102013218530; 20.03.2014 DE 102014205216
(43) Veröffentlichungstag der Anmeldung: 18.03.2015
(73) Patentinhaber: ROBERT BOSCH GMBH, 70442 Stuttgart (DE)
(72) Erfinder: Zahn, Wolf, 70439 Stuttgart (DE); Baumgartner, Josef, 70376 Stuttgart (DE); Glauning, Rainer, 70771 Leinfelden-Echterdingen (DE)

(56) Entgegenhaltungen:
- EP-A1- 2 421 067
- EP-A1- 2 487 736
- EP-A2- 2 009 718
- DE-A1-102008 040 341
- DE-A1-102011 081 819
- US-B1- 6 350 149

## Beschreibung

### Stand der Technik

Es ist bereits eine Akkuvorrichtung nach dem Oberbegriff des Anspruchs 1 bekannt.

### Offenbarung der Erfindung

Die Erfindung geht aus von einer Akkuvorrichtung, insbesondere von einer Handwerkzeugmaschinenakkuvorrichtung, mit zumindest einem Gehäuseelement, mit zumindest einem Energiespeicherelement, das von dem Gehäuseelement zumindest teilweise umschlossen ist, mit zumindest einer Kontakteinheit und mit einer Verbindungseinheit, die zumindest teilweise dazu vorgesehen ist, zumindest die Kontakteinheit insbesondere elektrisch mit dem zumindest einen Energiespeicherelement zu verbinden, und die zumindest teilweise stoffschlüssig mit dem Gehäuseelement verbunden ist.
Es wird vorgeschlagen, dass die Kontakteinheit zumindest ein Kontaktelement und die Verbindungseinheit zumindest ein Verbindungselement umfasst, die als getrennt hergestellte, miteinander verbundene Bauteile ausgebildet sind. Unter einem "Energiespeicherelement" soll in diesem Zusammenhang insbesondere ein Element verstanden werden, das zumindest teilweise dazu vorgesehen ist, insbesondere elektrische Energie aufzunehmen, zu speichern und wieder abzugeben. Vorzugsweise können mehrere Energiespeichermodule zusammengeschaltet werden, um insbesondere eine Speicherkapazität vorteilhaft zu erhöhen. Das Energiespeicherelement ist vorzugsweise als Akkuzelle ausgebildet. Unter "vorgesehen" soll insbesondere speziell ausgestaltet, ausgelegt und/oder ausgestattet verstanden werden. Unter "zumindest teilweise umschlossen" soll in diesem Zusammenhang insbesondere verstanden werden, dass die Gehäuseeinheit das zumindest eine Energiespeicherelement in zumindest einer Ebene über einen Winkelbereich von mehr als 180°, vorzugsweise mehr als 270°, besonders bevorzugt von 360° umgibt. In einem besonders bevorzugten Ausführungsbeispiel umgibt die Gehäuseeinheit das zumindest eine Energiespeicherelement auf zumindest zwei, geneigt zueinander angeordneten Ebenen über einen Winkelbereich von insbesondere mehr als 180°, vorzugsweise mehr als 270°, besonders bevorzugt von 360°.

Unter einer "Kontakteinheit" soll in diesem Zusammenhang insbesondere eine Einheit verstanden werden, die dazu vorgesehen ist, insbesondere eine elektrische Verbindung zwischen der Akkuvorrichtung und einer Handwerkzeugmaschine und/oder einer Ladeeinheit herzustellen. Die Kontakteinheit ist vorzugsweise zumindest teilweise zu einer direkten Kontaktierung insbesondere zumindest eines Teils einer Kopplungseinheit der Handwerkzeugmaschine und/oder Ladeeinheit vorgesehen. Die Verbindungseinheit ist vorzugsweise zumindest teilweise zu einer wirkungsmäßigen Verbindung oder Kopplung des zumindest einen Energiespeicherelements mit der Kontakteinheit vorgesehen. Die Verbindungseinheit kann zudem zumindest teilweise zu einer wirkungsmäßigen, insbesondere elektrischen Verbindung oder Kopplung der Kontakteinheit mit einer Elektronikeinheit und/oder mit einer anderen, einem Fachmann als sinnvoll erscheinenden Einheit vorgesehen sein.

Unter "stoffschlüssig verbunden" soll insbesondere verstanden werden, dass das zumindest eine Gehäuseelement und die Verbindungseinheit zumindest teilweise durch atomare oder molekulare Kräfte zusammengehalten werden, wie beispielsweise durch Löten, Schweißen, Kleben und/oder Vulkanisieren.

Unter einem "Kontaktelement" soll in diesem Zusammenhang insbesondere ein Element verstanden werden, das zumindest teilweise aus einem elektrisch leitfähigen Material, wie insbesondere aus einem Metall, hergestellt ist und das dazu vorgesehen ist, insbesondere einen elektrischen Kontakt zwischen insbesondere zumindest einem Element der Verbindungseinheit, insbesondere dem zumindest einen Verbindungselement und von außen anschließbaren Geräten, wie insbesondere einer Handwerkzeugmaschine und/oder einer Ladeeinheit, herzustellen. In einem besonders bevorzugten Ausführungsbeispiel ist das zumindest eine Kontaktelement aus einem Metallblech herausgestanzt ausgebildet. Besonders bevorzugt erstreckt sich ein Kontaktelement in einem montierten Zustand zumindest im Wesentlichen senkrecht zur Wandung der Gehäuseeinheit, die das Kontaktelement insbesondere direkt umgibt. Unter einem "Verbindungselement" soll in diesem Zusammenhang insbesondere ein Element verstanden werden, das zumindest teilweise aus einem elektrisch leitfähigen Material, wie insbesondere aus einem Metall, hergestellt ist und das dazu vorgesehen ist, einen insbesondere elektrischen Kontakt zwischen insbesondere innerhalb der Akkuvorrichtung angeordneten Elementen der Akkuvorrichtung, wie insbesondere einer Leiterplatte, einer Elektronikeinheit und/oder dem zumindest einen Energiespeicherelement ,und zumindest einem Element der Kontakteinheit, insbesondere dem zumindest einen Kontaktelement, herzustellen. In einem besonders bevorzugten Ausführungsbeispiel ist das zumindest eine Verbindungselement zumindest teilweise aus einem Metallblech herausgestanzt ausgebildet.

Unter "getrennt hergestellte, miteinander verbundene Bauteile" sollen in diesem Zusammenhang insbesondere zumindest zwei Elemente verstanden werden, die in zumindest teilweise, vorzugsweise zumindest nahezu vollständig getrennten und voneinander unabhängigen Prozessen hergestellt werden und in einem weiteren, gemeinsamen Prozess zumindest teilweise fest, insbesondere direkt, miteinander gekoppelt werden. Die getrennt hergestellten, miteinander verbundenen Bauteile werden vorzugsweise in einem an dem zumindest einen Gehäuseelement befestigten Zustand zumindest eines der zumindest zwei Bauteile miteinander verbunden. Das zumindest eine Kontaktelement und das zumindest eine Verbindungselement, die als die getrennt hergestellten, miteinander verbundenen Bauteile ausgebildet sind, werden vorzugsweise zumindest teilweise stoffschlüssig miteinander verbunden. Unter "stoffschlüssig verbunden" soll insbesondere verstanden werden, dass die Masseteile durch atomare oder molekulare Kräfte zusammengehalten werden, wie beispielsweise beim Löten, Schweißen, Kleben und/oder Vulkanisieren. Alternativ oder zusätzlich ist es jedoch auch denkbar, dass das zumindest eine Kontaktelement und das zumindest eine Verbindungselement zumindest teilweise form- und/oder kraftschlüssig miteinander verbunden werden, wie beispielsweise durch Stecken, Verrasten, Crimpen und/oder auf eine andere, einem Fachmann als sinnvoll erscheinende Weise.

Durch die erfindungsgemäße Ausgestaltung der Akkuvorrichtung können auf vorteilhaft einfache Weise eine bevorzugt gute und gezielte Bearbeitbarkeit des zumindest einen Kontaktelements der Kontakteinheit und des zumindest einen Verbindungselements der Verbindungseinheit sowie eine vorteilhaft staub- und/oder feuchtigkeitsgeschützte Ausgestaltung der Akkuvorrichtung erreicht werden. Zudem kann dadurch eine Trennung zwischen einer Umgebung und einem Inneren der Akkuvorrichtung an einer Zuleitung zu dem zumindest einen Kontaktelement anstatt an dem zumindest einen Kontaktelement angeordnet werden. Ferner kann dadurch auf vorteilhaft einfache Weise eine separate, voneinander unabhängige Bearbeitung des zumindest einen Kontaktelements und des zumindest einen Verbindungselements und dadurch eine vorteilhafte Anpassung der Kontaktelemente, wie beispielsweise bei Hochstromanwendungen insbesondere bezüglich Widerstand, Korrosion und Kosten, erreicht werden. Ferner kann eine bevorzugte Flexibilität bei einer Auswahl eines Lieferanten und ein bevorzugt geringer Integrationsgrad erreicht werden, da ein Know-how für die Herstellung des zumindest einen, mit dem zumindest einen Gehäuseelement verbundenen Verbindungselements und für die Herstellung des zumindest einen Kontaktelements voneinander getrennt werden kann. Zudem ist eine vorteilhaft einfache Realisierung für unterschiedliche Varianten, insbesondere unterschiedliche Leistungsvarianten, der Akkuvorrichtung, insbesondere der Kontaktelemente erreichbar, wobei Toleranzabweichungen bei einem Verbinden des zumindest einen Gehäuseelements mit dem zumindest einen Verbindungselement vorteilhaft verhindert werden können.

Zudem wird vorgeschlagen, dass das zumindest eine Verbindungselement der zumindest einen Verbindungseinheit zumindest teilweise von dem Gehäuseelement umspritzt ausgebildet ist. Unter "umspritzen" soll in diesem Zusammenhang insbesondere eine stoffschlüssige Verbindung verstanden werden, die zumindest teilweise durch ein Spritzgussverfahren, in dem das zumindest eine Gehäuseelement zumindest teilweise aus zumindest einem Kunststoff insbesondere durch Urformen geformt und dabei an das zumindest eine Verbindungseinheit zumindest teilweise direkt angeformt bzw. angespritzt wird, entsteht. Ferner ist es auch denkbar, dass das zumindest eine Verbindungselement der zumindest einen Verbindungseinheit zumindest teilweise von einem Teil des zumindest einen Gehäuseelements, das als getrennt hergestelltes, mit dem zumindest einen Gehäuseelement verbindbares Bauteil ausgebildet ist, umspritzt werden kann und bei einer Montage in das zumindest eine Gehäuseelement eingesetzt werden kann. Dadurch kann eine konstruktiv einfache und bevorzugt zuverlässige, kostengünstige und wasserdichte Verbindung zwischen dem zumindest einen Gehäuseelement und dem zumindest einen Verbindungselement erreicht werden.

Ferner wird vorgeschlagen, dass das zumindest eine Kontaktelement und das zumindest eine Verbindungselement zumindest teilweise elektrisch leitend miteinander verbunden sind. Unter "elektrisch leitend" soll in diesem Zusammenhang insbesondere verstanden werden, dass zwischen dem zumindest einen Kontaktelement und dem zumindest einen Verbindungselement eine elektrische Leitfähigkeit σ vorgesehen ist, die insbesondere zumindest 1 ^{s}/ₘ, vorzugsweise 5 ^{s}/ₘ, bevorzugt 10 ^{s}/ₘ und besonders bevorzugt 50 ^{s}/ₘ beträgt. Dadurch kann eine vorteilhaft effektive und konstruktiv einfache Ausgestaltung der Akkuvorrichtung erreicht werden.

Zudem wird vorgeschlagen, dass das zumindest eine Verbindungselement zumindest eine Stromschiene umfasst, die in das zumindest eine Gehäuseelement eingebracht ist. Unter einer "Stromschiene" soll in diesem Zusammenhang insbesondere ein zumindest teilweise starr ausgebildetes, elektrisch leitendes Element verstanden werden. Die Stromschiene kann insbesondere als Metallplatte ausgebildet sein. Die Stromschiene ist insbesondere dadurch in das zumindest eine Gehäuseelement eingebracht, dass die Seitenkanten der Stromschiene von dem Material des Gehäuseelements umspritzt sind. Eine erste Seitenfläche der Stromschiene weist dabei in das Innere des Gehäuseelements, während eine zweite Seitenfläche der Stromschiene nach außen weist. Die Stromschiene bildet dabei eine Teilfläche einer Fläche des Gehäuseelements, in die die Stromschiene integriert ist. Die Stromschiene ist im Wesentlichen parallel zu der Fläche des Gehäuseelements angeordnet, in die die Stromschiene eingebracht ist. Alternativ oder zusätzlich ist es auch denkbar, dass das zumindest eine Verbindungselement zumindest einen starren Draht umfasst. Dadurch kann eine bevorzugt kostengünstige, konstruktiv einfache und vorteilhaft zuverlässige und robuste Ausgestaltung der Verbindungseinheit der Akkuvorrichtung erreicht werden.

Ferner wird vorgeschlagen, dass das zumindest eine Verbindungselement zumindest ein Stromkabel umfasst. Unter einem "Stromkabel" soll in diesem Zusammenhang insbesondere ein zumindest teilweise flexibel und beweglich ausgebildetes, elektrisch leitendes Element verstanden werden. Dadurch kann eine bevorzugt kostengünstige, konstruktiv einfache und vorteilhaft zuverlässige und robuste Ausgestaltung der Verbindungseinheit der Akkuvorrichtung erreicht werden.

Des Weiteren wird vorgeschlagen, dass die Akkuvorrichtung eine Elektronikeinheit umfasst, die direkt elektrisch leitend mit dem zumindest einen Verbindungselement verbunden ist. Unter einer "Elektronikeinheit" soll in diesem Zusammenhang insbesondere eine Einheit verstanden werden, die zumindest in einem Betriebszustand der Akkuvorrichtung zumindest teilweise zu einer Steuerung und/oder zu einer Regelung zumindest eines Teils der Akkuvorrichtung, insbesondere zu einer Steuerung und/oder zu einer Regelung eines Lade- und/oder Entladevorgangs des zumindest einen Energiespeicherelements, vorgesehen ist. Vorzugsweise umfasst die Elektronikeinheit zumindest eine Platine. Die Elektronikeinheit weist vorzugsweise Elektronikkomponenten wie insbesondere zumindest einen Transistor, zumindest einen Kondensator, besonders bevorzugt zumindest einen Feldeffekttransistor (MOSFET) und/oder zumindest einen Bipolartransistor, insbesondere mit isolierter Gate-Elektrode, (IGBT) auf. Dadurch können ein vorteilhaft präzises Laden und/oder Entladen und ein vorteilhaft hoher Bedienkomfort der Akkuvorrichtung erreicht werden.

Des Weiteren wird vorgeschlagen, dass die Elektronikeinheit zumindest teilweise mit dem zumindest einen Gehäuseelement gekoppelt ist, in das das zumindest eine Verbindungselement zumindest teilweise eingebracht ist. Die Elektronikeinheit ist vorzugsweise form- und/oder kraftschlüssig, insbesondere lösbar, mit dem zumindest einen Gehäuseelement gekoppelt. Es ist jedoch auch denkbar, dass die Elektronikeinheit zumindest teilweise fest, insbesondere stoffschlüssig, und/oder auf eine andere, einem Fachmann als sinnvoll erscheinende Weise mit dem zumindest einen Gehäuseelement gekoppelt ist. Dadurch kann eine konstruktiv einfache und kompakte Ausgestaltung der Akkuvorrichtung erreicht werden.

Ferner wird ein System mit zumindest der erfindungsgemäßen Akkuvorrichtung, insbesondere mit einer Handwerkzeugmaschinenakkuvorrichtung, und mit zumindest einer Handwerkzeugmaschine, die zumindest einen Kopplungsbereich zu einer Kopplung mit der erfindungsgemäßen Akkuvorrichtung aufweist, und/oder mit zumindest einer Ladeeinheit, die zumindest einen Kopplungsbereich zu einer Kopplung mit der erfindungsgemäßen Akkuvorrichtung umfasst, vorgeschlagen. Dadurch können eine vorteilhaft flexible Einsetzbarkeit und ein bevorzugt hoher Bedienerkomfort der Akkuvorrichtung erreicht werden.

Zudem wird ein Verfahren zur Herstellung der erfindungsgemäßen Akkuvorrichtung, insbesondere zur Herstellung der Handwerkzeugmaschinenakkuvorrichtung, vorgeschlagen, das zumindest einen Verfahrensschritt umfasst, in dem zumindest ein Verbindungselement einer Verbindungseinheit, das zumindest teilweise dazu vorgesehen ist, zumindest ein Kontaktelement einer Kontakteinheit insbesondere elektrisch mit zumindest einem Energiespeicherelement zu koppeln, in zumindest ein Gehäuseelement stoffschlüssig eingebracht wird, und mit zumindest einem weiteren Verfahrensschritt, in dem das zumindest eine Kontaktelement einer Kontakteinheit nach dem Einbringen des zumindest einen Verbindungselements der Verbindungseinheit in das zumindest eine Gehäuseelement mit dem zumindest einen Verbindungselement der Verbindungseinheit verbunden wird. Dadurch kann eine vorteilhaft einfache Montage der Akkuvorrichtung und ein bevorzugt hoher Schutz gegen ein Eindringen von Staub bzw. Schmutz und/oder Feuchtigkeit in die Akkuvorrichtung erreicht werden.

Die erfindungsgemäße Akkuvorrichtung soll hierbei nicht auf die oben beschriebene Anwendung und Ausführungsform beschränkt sein. Insbesondere kann die erfindungsgemäße Akkuvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1a: eine schematische Darstellung einer Ladeeinheit eines erfindungsgemäßen Systems in einer perspektivischen Ansicht,
- Fig. 1b: eine schematische Darstellung einer Handwerkzeugmaschine eines erfindungsgemäßen Systems in einer perspektivischen Ansicht,
- Fig. 2: eine schematische Darstellung einer erfindungsgemäßen Akkuvorrichtung in einer perspektivischen Ansicht,
- Fig. 3a: ein Gehäuseelement der erfindungsgemäßen Akkuvorrichtung mit einer Verbindungseinheit in einer Draufsicht,
- Fig. 3b: das Gehäuseelement der erfindungsgemäßen Akkuvorrichtung mit der Verbindungseinheit und mit der Kontakteinheit in einer Draufsicht,
- Fig. 3c: das Gehäuseelement der erfindungsgemäßen Akkuvorrichtung mit der Verbindungseinheit in einer Unteransicht und
- Fig. 4: ein schematisches Ablaufdiagramm eines Verfahrens zur Herstellung der erfindungsgemäßen Akkuvorrichtung.

### Beschreibung des Ausführungsbeispiels

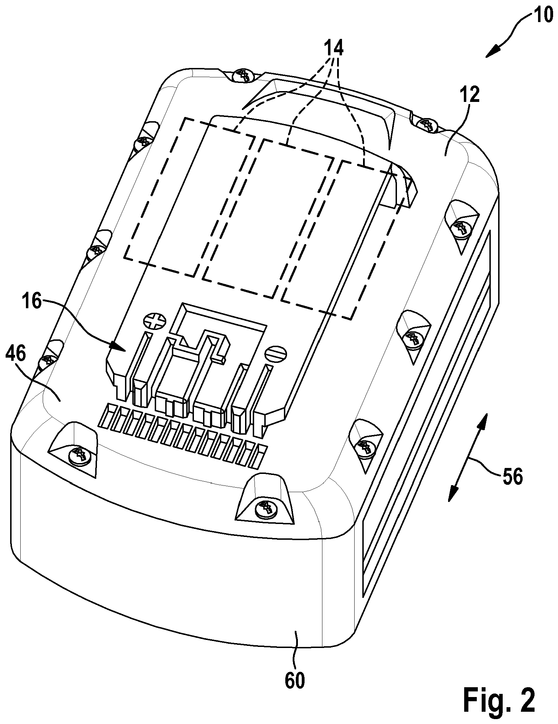

In Figur 2 ist eine Akkuvorrichtung 10 dargestellt, die einen Akkumulator bildet. Die Akkuvorrichtung 10 umfasst eine Gehäuseeinheit 46 und zumindest ein Energiespeicherelement 14, das von der Gehäuseeinheit 46 umschlossen ist. Die Gehäuseeinheit 46 weist zwei Gehäuseelemente 12, 60 auf, die miteinander verbunden sind. Das Gehäuseelement 12 umschließt die Energiespeicherelemente 14 teilweise. Die Gehäuseeinheit 46 ist aus einem Kunststoff gebildet. Die Akkuvorrichtung 10 weist mehrere, nicht näher dargestellte Energiespeicherelemente 14 auf, die miteinander gekoppelt sind. Die Energiespeicherelemente 14 sind zu einer Speicherung von Energie vorgesehen. Die Energiespeicherelemente 14 sind zu einer Speicherung von elektrischer Energie vorgesehen. Die Energiespeicherelemente 14 sind von wiederaufladbaren Batteriezellen gebildet. Die Energiespeicherelemente 14 sind zu einer Speicherung einer elektrischen Ladung und zu einer Bereitstellung von elektrischer Spannung in einem Betriebszustand der Akkuvorrichtung 10 vorgesehen. Die Energiespeicherelemente 14 sind elektrisch miteinander verbunden. Die Energiespeicherelemente 14 sind in Reihe geschaltet. Die Akkuvorrichtung 10 kann in einem Betriebszustand eine elektrische Spannung von 18 V zur Verfügung stellen. Es ist jedoch auch denkbar, dass die Akkuvorrichtung 10 dazu vorgesehen ist, in einem Betriebszustand eine elektrische Spannung von 3,6 V, 10,8 V, 14,4 V, 36 V oder in Höhe eines anderen, einem Fachmann als sinnvoll erscheinenden Werts zur Verfügung zu stellen. Die Akkuvorrichtung 10 weist in einem vollständig geladenen Zustand eine elektrische Ladung von 4 Ah auf. Es ist jedoch auch denkbar, dass die Akkuvorrichtung 10 dazu vorgesehen ist, in einem vollständig geladenen Zustand eine elektrische Ladung von 1,3 V, 1,5 V, 2 V, 3 V oder in Höhe eines anderen, einem Fachmann als sinnvoll erscheinenden Werts zur Verfügung zu stellen.

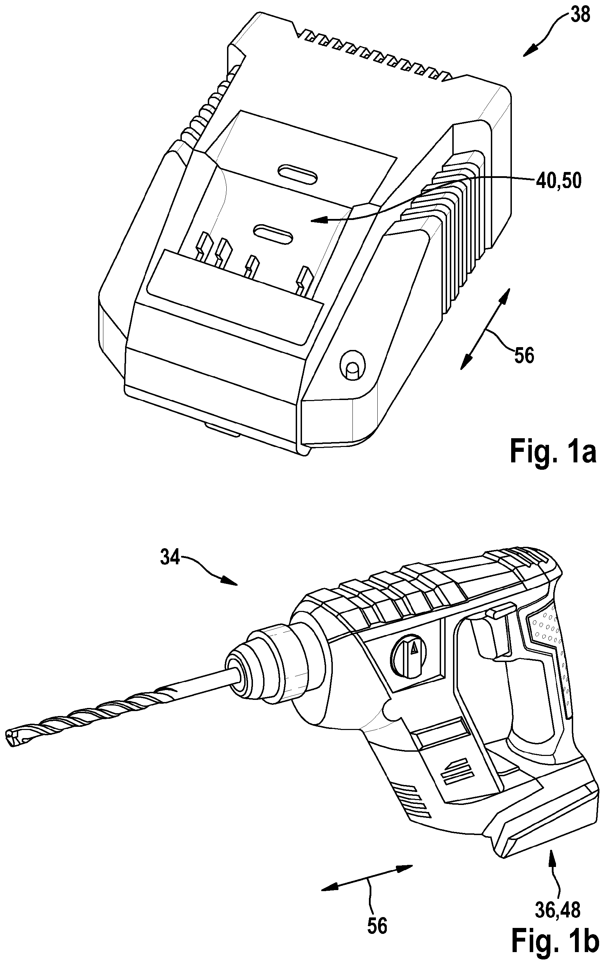

Die Akkuvorrichtung 10 ist als Handwerkzeugmaschinenakkuvorrichtung ausgebildet. Die Akkuvorrichtung 10 ist mit einer Handwerkzeugmaschine 34 koppelbar ausgebildet. Die Akkuvorrichtung 10 ist dazu vorgesehen, die Handwerkzeugmaschine 34 in einem gekoppelten Zustand mit Energie zu versorgen. Die Akkuvorrichtung 10 ist zu einer Versorgung der Handwerkzeugmaschine 34 mit elektrischer Energie zu einem Antrieb der Handwerkzeugmaschine 34 vorgesehen. In Figur 1 b ist eine beispielhafte Ausgestaltung der Handwerkzeugmaschine 34 als Schlagbohrmaschine gezeigt. Es sind jedoch auch weitere, einem Fachmann als sinnvoll erscheinende Ausgestaltungen der Handwerkzeugmaschine 34, wie beispielsweise als Akkuschrauber, Drehschlagschrauber, Bohrhammer, Bohrmaschine, Abbruchhammer, Stichsäge, Kreissäge, Säbelsäge, Multicutter, Hobel, Winkelschleifer oder Schere, denkbar. Die Handwerkzeugmaschine 34 weist einen Aufnahmebereich 36 auf, in dem eine Kopplungseinheit 48 angeordnet ist. Die Akkuvorrichtung 10 ist verliersicher über den Aufnahmebereich 36 der Handwerkzeugmaschine 34 mit der Handwerkzeugmaschine 34 koppelbar. Die Akkuvorrichtung 10 ist lösbar mit der Handwerkzeugmaschine 34 koppelbar. Die Akkuvorrichtung 10 ist über die Kopplungseinheit 48 der Handwerkzeugmaschine 34 elektrisch mit der Handwerkzeugmaschine 34 verbindbar.

In Figur 1a ist eine beispielhafte Ausgestaltung einer Ladeeinheit 38 gezeigt. Die Ladeeinheit 38 ist als Akkuladegerät ausgebildet. Es sind jedoch auch weitere, einem Fachmann als sinnvoll erscheinende Ausgestaltungen der Ladeeinheit 38 denkbar. Die Ladeeinheit 38 weist einen Aufnahmebereich 40 auf, in dem eine Kopplungseinheit 50 angeordnet ist. Die Akkuvorrichtung 10 ist verliersicher über den Aufnahmebereich 40 der Ladeeinheit 38 mit der Ladeeinheit 38 koppelbar. Die Akkuvorrichtung 10 ist lösbar mit der Ladeeinheit 38 koppelbar. Die Akkuvorrichtung 10 ist über die Kopplungseinheit 50 der Ladeeinheit 38 elektrisch mit der Ladeeinheit 38 verbindbar. Die Akkuvorrichtung 10 ist in einem mit der Ladeeinheit 38 gekoppelten Zustand mit elektrischer Energie aufladbar. Hierzu ist die Ladeeinheit 38 mit einer Netzspannung koppelbar, transformiert die Netzspannung, sodass an die Akkuvorrichtung 10 angepasste Werte vorliegen, und führt der Akkuvorrichtung 10 die elektrische Energie zu. Die zugeführte Energie wird in den Energiespeicherelementen 14 gespeichert und kann in einem mit der Handwerkzeugmaschine 34 gekoppelten Zustand wieder an die Handwerkzeugmaschine 34 abgegeben werden und deren Antriebseinheit antreiben.

Die Akkuvorrichtung 10 umfasst eine Kontakteinheit 16, die zumindest ein Kontaktelement 20, 22 aufweist. Die Kontakteinheit 16 weist mehrere Kontaktelemente 20, 22 auf. Die Kontakteinheit 16 ist dazu vorgesehen, den Energiespeicherelementen 14 Energie zuzuführen. Die Kontakteinheit 16 ist dazu vorgesehen, den Energiespeicherelementen 14 elektrische Energie zuzuführen. Die Kontakteinheit 16 ist dazu vorgesehen, die Energiespeicherelemente 14 aufzuladen. Die Kontakteinheit 16 ist ferner dazu vorgesehen, Energie von den Energiespeicherelementen 14 abzuführen. Die Kontakteinheit 16 ist ferner dazu vorgesehen, elektrische Energie von den Energiespeicherelementen 14 abzuführen. Die Kontakteinheit 16 ist zu einer elektrischen Kopplung der Energiespeicherelemente 14 der Akkuvorrichtung 10 mit der Handwerkzeugmaschine 34 bzw. mit der Ladeeinheit 38 vorgesehen. Die Kontakteinheit 16 der Akkuvorrichtung 10 ist dazu vorgesehen, die Kopplungseinheit 48 der Handwerkzeugmaschine 34 in einem gekoppelten Zustand direkt zu kontaktieren. Die Kontakteinheit 16 der Akkuvorrichtung 10 ist dazu vorgesehen, die Kopplungseinheit 50 der Ladeeinheit 38 in einem gekoppelten Zustand direkt zu kontaktieren. Die Akkuvorrichtung 10, die Handwerkzeugmaschine 34 und die Ladeeinheit 38 bilden ein miteinander kompatibles System.

Die Kontaktelemente 20, 22 der Kontakteinheit 16 der Akkuvorrichtung 10 sind aus einem Metall hergestellt. Die Kontaktelemente 20, 22 der Kontakteinheit 16 der Akkuvorrichtung 10 sind aus einem Federstahl hergestellt. Es sind jedoch auch andere, einem Fachmann als sinnvoll erscheinende Materialien und/oder Ausgestaltungen der Kontaktelemente 20, 22 der Kontakteinheit 16 der Akkuvorrichtung 10 denkbar. Die Kontaktelemente 20, 22 der Kontakteinheit 16 der Akkuvorrichtung 10 sind aus einem Blech gebildet. Die Kontaktelemente 20, 22 der Kontakteinheit 16 der Akkuvorrichtung 10 sind federelastisch ausgebildet. Es sind jedoch auch andere, einem Fachmann als sinnvoll erscheinende Materialien und/oder Ausgestaltungen der Kontaktelemente 20, 22 der Kontakteinheit 16 der Akkuvorrichtung 10 denkbar. Die Kontakteinheit 16 weist unterschiedlich ausgebildete Kontaktelemente 20, 22 auf. Die Kontakteinheit 16 weist zwei als Tulpenkontakt ausgebildete Kontaktelemente 20 auf. Ferner umfasst die Kontakteinheit 16 der Akkuvorrichtung 10 zwei als Kontaktschiene ausgebildete Kontaktelemente 22 auf.

Die Akkuvorrichtung 10 umfasst eine Verbindungseinheit 18, die dazu vorgesehen ist, die Kontakteinheit 16 elektrisch mit den Energiespeicherelementen 14 zu verbinden. Die Verbindungseinheit 18 ist stoffschlüssig mit dem Gehäuseelement 12 verbunden. Die Verbindungseinheit 18 umfasst zumindest ein Verbindungselement 24, 26. Die Verbindungseinheit 18 umfasst mehrere Verbindungselemente 24, 26. Die Verbindungselemente 24, 26 erstrecken sich durch das Gehäuseelement 12 hindurch. Das Gehäuseelement 12 ist als Gehäusedeckel ausgebildet. Die Verbindungselemente 24, 26 erstrecken sich durch eine Materialstärke des Gehäuseelements 12 der Gehäuseeinheit 46 hindurch. Die Verbindungselemente 24, 26 der Verbindungseinheit 18 sind von dem Gehäuseelement 12 der Gehäuseeinheit 46 umspritzt. Es ist jedoch auch denkbar, die Verbindungselemente 24, 26 der Verbindungseinheit 18 der Akkuvorrichtung 10 auf eine andere, einem Fachmann als sinnvoll erscheinende Weise mit dem Gehäuseelement 12 der Gehäuseeinheit 46 zu verbinden, wie beispielsweise durch Kleben. Ferner ist es auch denkbar, die Verbindungselemente 24, 26 der Kontakteinheit 18 der Akkuvorrichtung 10 form- und/oder kraftschlüssig, insbesondere durch Verschrauben, Verrasten und/oder auf eine andere, einem Fachmann als sinnvoll erscheinende Weise, zu verbinden.

Die Verbindungselemente 24, 26 der Verbindungseinheit 18 der Akkuvorrichtung 10 sind über eine Elektronikeinheit 32 mit den Energiespeicherelementen 14 gekoppelt. Es ist jedoch auch denkbar, dass die Verbindungselemente 24, 26 der Verbindungseinheit 18 der Akkuvorrichtung 10 direkt mit den Energiespeicherelementen 14 gekoppelt sind. Die Elektronikeinheit 32 der Akkuvorrichtung 10 ist zu einer Steuerung eines Lade- und Entladevorgangs der Energiespeicherelemente 14 vorgesehen. Die Elektronikeinheit 32 der Akkuvorrichtung 10 umfasst eine Platine. Die Elektronikeinheit 32 ist elektrisch leitend mit den Verbindungselementen 24, 26 verbunden. Die Verbindungselemente 24, 26 der Verbindungseinheit 18 der Akkuvorrichtung 10 sind jeweils an der Platine der Elektronikeinheit 32 angelötet. Es ist jedoch auch denkbar, dass die Verbindungselemente 24, 26 der Verbindungseinheit 18 an der Platine der Elektronikeinheit 32 angeschweißt, angeklebt, angesteckt, verrastet und/oder auf eine andere, einem Fachmann als sinnvoll erscheinende Weise befestigt sind. Die Elektronikeinheit 32 ist mit dem Gehäuseelement 12, in das die Verbindungselemente 24, 26 der Verbindungseinheit 18 eingebracht sind, gekoppelt. Ein in einem montierten Zustand des Gehäuseelements 12 innerhalb der Gehäuseeinheit 46 angeordnetes Ende der Verbindungselemente 24, 26 der Verbindungseinheit 18 der Akkuvorrichtung 10 ist jeweils indirekt über die Elektronikeinheit 32 mit den Energiespeicherelementen 14 verbunden. Ein dem innerhalb der Gehäuseeinheit 46 gegenüberliegend angeordnetes Ende der Verbindungselemente 48 ist in einem montierten Zustand der Gehäuseeinheit 12 außerhalb der Gehäuseeinheit 46 angeordnet.

Die Verbindungselemente 24, 26 der Verbindungseinheit 18 der Akkuvorrichtung 10 sind elektrisch leitend ausgebildet. Die Verbindungselemente 24, 26 der Verbindungseinheit 18 der Akkuvorrichtung 10 sind aus einem Metall gebildet. Die Verbindungselemente 24, 26 der Verbindungseinheit 18 der Akkuvorrichtung 10 sind aus Kupfer gebildet. Es sind jedoch auch andere, einem Fachmann als sinnvoll erscheinende Materialien wie beispielsweise Aluminium, Messing oder eine Versilberung denkbar. Die Verbindungselemente 24, 26 der Verbindungseinheit 18 der Akkuvorrichtung 10 sind mit den Energiespeicherelementen 14 gekoppelt. Die Verbindungselemente 24, 26 der Verbindungseinheit 18 der Akkuvorrichtung 10 sind wirkungsmäßig mit den Energiespeicherelementen 14 gekoppelt. Die Verbindungselemente 24, 26 der Verbindungseinheit 18 der Akkuvorrichtung 10 sind elektrisch mit den Energiespeicherelementen 14 gekoppelt. Die Verbindungseinheit 18 weist unterschiedlich ausgebildete Verbindungselemente 24, 26 auf. Die Verbindungseinheit 18 weist zwei als Metallplatte ausgebildete Verbindungselemente 24 auf. Ferner umfasst die Verbindungseinheit 18 der Akkuvorrichtung 10 zwei als Metallschiene ausgebildete Verbindungselemente 26 auf. Die Kontaktelemente 20, 22 der Kontakteinheit 16 und die Verbindungselemente 24, 26 der Verbindungseinheit 18 sind als getrennt hergestellte, miteinander verbundene Bauteile ausgebildet. Die Kontaktelemente 20, 22 der Kontakteinheit 16 und die Verbindungselemente 24, 26 der Verbindungseinheit 18 sind elektrisch leitend miteinander verbunden. Die Kontaktelemente 20, 22 der Kontakteinheit 16 sind mit einem der Verbindungselemente 24, 26 der Verbindungseinheit 18 verbunden. Die Kontaktelemente 20, 22 sind mit dem außenliegenden Ende des Verbindungselements 24, 26 verbunden.

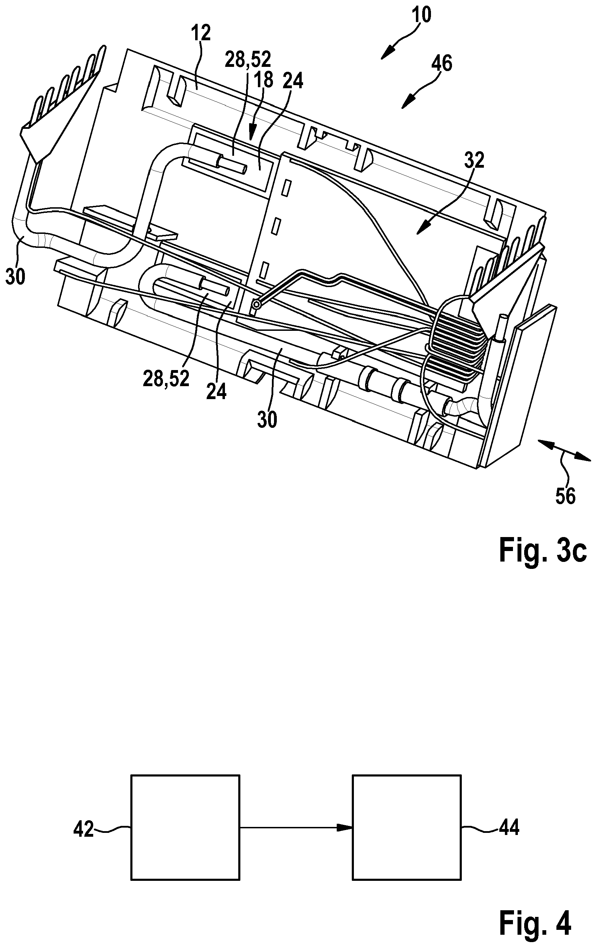

In einem Verfahren zur Herstellung der Akkuvorrichtung 10, die als Handwerkzeugmaschinenakkuvorrichtung ausgebildet ist, werden in einem ersten Verfahrensschritt 42 das Gehäuseelement 12 hergestellt und dabei die als Metallplatte ausgebildeten Verbindungselemente 24 und die als Metallschiene ausgebildeten Verbindungselemente 26 der Verbindungseinheit 18, die dazu vorgesehen sind, die Kontaktelemente 20, 22 der Kontakteinheit 16 elektrisch mit den Energiespeicherelementen 14 zu koppeln, stoffschlüssig in dem Gehäuseelement 12 eingebracht. Der erste Verfahrensschritt 42 umfasst ein Spritzgussverfahren. Die als Metallplatte ausgebildeten Verbindungselemente 24 und die als Metallschiene ausgebildeten Verbindungselemente 26 der Verbindungseinheit 18 werden von dem Material des Gehäuseelements 12 in dem ersten Verfahrensschritt 42 umspritzt (Figur 4).

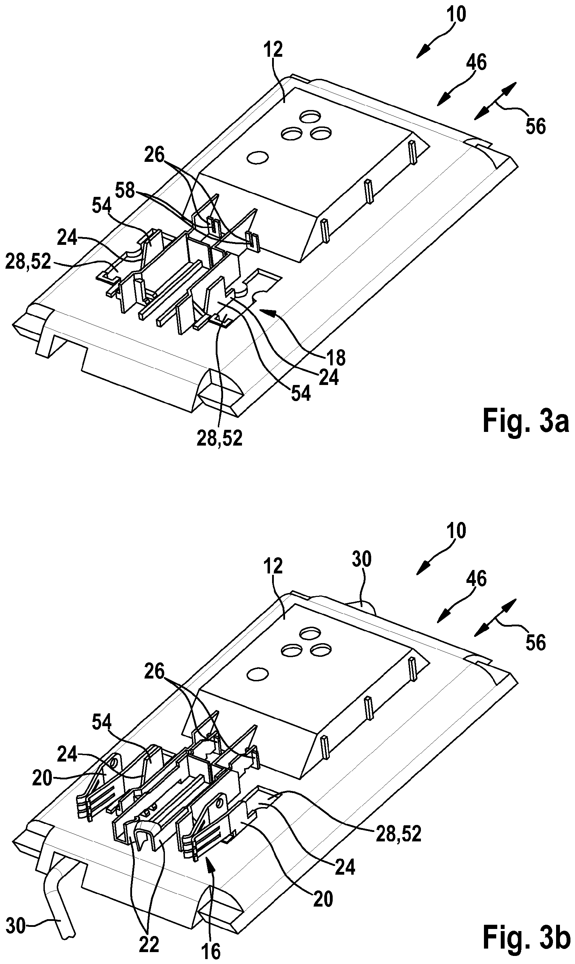

Die als Metallplatte ausgebildeten Verbindungselemente 24 umfassen jeweils eine Stromschiene 28. Die Stromschiene 28 bildet einen ersten Bereich 52 der als Metallplatte ausgebildeten Verbindungselemente 24. Der erste Bereich ist eben ausgebildet und seine Haupterstreckungsfläche verläuft parallel zu der Haupterstreckungsfläche des Gehäuseelements 12 in einem direkt angrenzenden Bereich (Figur 3a). Der erste Bereich 52 des als Metallplatte ausgebildeten Verbindungselements 24 ist von der Stromschiene 28 gebildet und ist in das Gehäuseelement 12 eingebracht. Dabei weist die Stromschiene 28 mit einer ersten Seitenfläche nach innen, d.h. in das Innere der Gehäuseeinheit 46 der Akkuvorrichtung 10, und mit einer zweiten Seitenfläche nach außen, d.h. zu einem äußeren Bereich außerhalb der Gehäuseeinheit 46. Die Stromschiene 28 ist in das Gehäuseelement 12 eingebracht, indem die Seitenkanten der Stromschiene 28 von dem Gehäuseelement 12 umspritzt sind. Im dem Bereich der Stromschiene 28 bildet die erste Seitenfläche eine Innenfläche des Gehäuseelements 12 und die zweite Seitenfläche eine Außenfläche des Gehäuseelements 12. Die Haupterstreckungsebenen des ersten Bereichs 52 der als Metallplatte ausgebildeten Verbindungselemente 24 sind parallel zueinander angeordnet. Der erste Bereich 52 des als Metallplatte ausgebildeten Verbindungselements 24 der Verbindungseinheit 18 weist eine Materialstärke auf, die einer Materialstärke des Gehäuseelements 12 in etwa entspricht.

In den Verbindungsbereichen zwischen dem Gehäuseelement 12 und der Stromschiene 28, in denen die Stromschiene 28 in das Gehäuseelement 12 eingebracht ist, kann zusätzlich ein Dichtmittel vorgesehen sein. Das Dichtmittel ist dazu vorgesehen, die Verbindungsbereiche insbesondere gegen Feuchtigkeit abzudichten und die Stromschiene 28 gegen Korrosion zu schützen. Als Dichtmittel können beispielsweise Lacke, Fette, Klebstoffe, z.B. Silikone, oder Vergussmasse zum Einsatz kommen. Das Dichtmittel kann vor oder nach der Montage des Gehäuseelements 12 aufgebracht werden.

In der Ausführungsform nach Fig. 3 weisen die als Metallplatte ausgebildeten Verbindungselemente 24 der Verbindungseinheit 18 jeweils einen weiteren Bereich 54 auf, der eben ausgebildet ist und dessen Haupterstreckungsfläche senkrecht zu der Haupterstreckungsfläche des ersten Bereichs 52 und parallel zu einer Einschubrichtung 56 der Akkuvorrichtung 10 in einen Aufnahmebereich 36, 40 der Handwerkzeugmaschine 34 oder der Ladeeinheit 38 verläuft. Die Haupterstreckungsebenen des weiteren Bereichs 54 der als Metallplatte ausgebildeten Verbindungselemente 24 sind parallel zueinander angeordnet. Der weitere Bereich 54 der als Metallplatte ausgebildeten Verbindungselemente 24 ragt jeweils über eine direkt an das als Metallplatte ausgebildete Verbindungselement 24 angrenzende Außenfläche des Gehäuseelements 12 hinaus. Der weitere Bereich 54 der als Metallplatte ausgebildeten Verbindungselemente 24 ist jeweils quaderförmig ausgebildet. Der weitere Bereich 54 des als Metallplatte ausgebildeten Verbindungselements 24 kann mit dem ersten Bereich 52 einteilig ausgeführt sein. Alternativ kann der weitere Bereich 54 als ein von dem ersten Bereich 52 separat ausgebildeter Bereich ausgeführt sein, der mit dem ersten Bereich 52 z.B. durch Schweißen oder Löten elektrisch leitend verbunden ist.

Die als Metallschiene ausgebildeten Verbindungselemente 26 sind jeweils eben ausgebildet und weisen eine Haupterstreckungsebene auf, die senkrecht zu der Haupterstreckungsfläche des Gehäuseelements 12 in einem direkt angrenzenden Bereich und senkrecht zu einer Einschubrichtung 56 der Akkuvorrichtung 10 in einen Aufnahmebereich 36, 40 der Handwerkzeugmaschine 34 oder der Ladeeinheit 38 verläuft. Die Haupterstreckungsebenen der als Metallplatte ausgebildeten Verbindungselemente 26 sind parallel zueinander angeordnet. Die als Metallschiene ausgebildeten Verbindungselemente 26 sind jeweils quaderförmig ausgebildet und weisen jeweils einen schlitzförmigen Einschnitt 58 auf, dessen Haupterstreckungsrichtung parallel zu der Haupterstreckungsebene des jeweiligen als Metallschiene ausgebildeten Verbindungselements 26 verläuft. Die als Metallplatte ausgebildeten Verbindungselemente 26 ragen jeweils über eine direkt an das als Metallplatte ausgebildete Verbindungselement 26 angrenzende Außenfläche des Gehäuseelements 12 hinaus.

Das Verfahren weist einen weiteren Verfahrensschritt 44 auf, in dem die Kontaktelemente 20, 22 einer Kontakteinheit 16 nach dem Einbringen der Verbindungselemente 24, 26 der Verbindungseinheit 18 in das Gehäuseelement 12 mit jeweils einem der Verbindungselemente 24, 26 der Verbindungseinheit 18 verbunden werden (Figur 3b). In dem weiteren Verfahrensschritt 44 wird jeweils eines der als Tulpenkontakt ausgebildeten Kontaktelemente 20 der Kontakteinheit 16 mit jeweils einem der als Metallplatte ausgebildeten Verbindungselemente 24 der Verbindungseinheit 18 auf einer außenliegenden Seite der Akkuvorrichtung 10 verbunden. Das als Tulpenkontakt ausgebildete Kontaktelement 20 wird an den weiteren Bereich 54 des als Metallplatte ausgebildeten Verbindungselements 24 angelötet. Das als Tulpenkontakt ausgebildete Kontaktelement 20 kontaktiert zudem den ersten Bereich 52 des als Metallplatte ausgebildeten Verbindungselements 24 direkt. Alternativ oder zusätzlich ist es auch denkbar, dass das als Tulpenkontakt ausgebildete Kontaktelement 20 an den ersten Bereich 52 des als Metallplatte ausgebildeten Verbindungselements 24 angelötet wird. Das als Tulpenkontakt ausgebildete Kontaktelement 20 ist elektrisch leitend mit dem als Metallplatte ausgebildeten Verbindungselement 24 verbunden. Zudem wird in dem weiteren Verfahrensschritt 44 jeweils eines der als Kontaktschiene ausgebildeten Kontaktelemente 22 der Kontakteinheit 16 mit jeweils einem der als Metallschiene ausgebildeten Verbindungselemente 26 der Verbindungseinheit 18 auf einer außenliegenden Seite der Akkuvorrichtung 10 verbunden. Das als Kontaktschiene ausgebildete Kontaktelement 26 wird in den schlitzförmigen Einschnitt 58 des als Metallschiene ausgebildeten Verbindungselements 26 in Einschubrichtung 56 der Akkuvorrichtung 10 eingeschoben und an dem als Metallschiene ausgebildeten Verbindungselement 26 angelötet. Das als Kontaktschiene ausgebildete Kontaktelement 22 ist elektrisch leitend mit dem als Metallschiene ausgebildeten Verbindungselement 26 verbunden.

In Figur 3c ist eine Unterseite des Gehäuseelements 12 mit den umspritzten Verbindungselementen 24, 26 der Verbindungseinheit 18 und mit der an dem Gehäuseelement 12 befestigten Elektronikeinheit 32 dargestellt. Die als Metallschiene ausgebildeten Verbindungselemente 26 sind elektrisch leitend mit der Elektronikeinheit 32 verbunden. Die als Metallschiene ausgebildeten Verbindungselemente 26 sind direkt an die Elektronikeinheit 32 angelötet. Es ist jedoch auch denkbar, dass die als Metallschiene ausgebildeten Verbindungselemente 26 zudem jeweils ein Stromkabel aufweisen, über das die als Metallschiene ausgebildeten Verbindungselemente 26 mit der Elektronikeinheit 32 verbunden sind. Die als Metallplatte ausgebildeten Verbindungselemente 24 umfassen jeweils zusätzlich zu der Stromschiene 28 ein Stromkabel 30. Das Stromkabel 30 ist elektrisch leitend mit der Stromschiene 28, die von dem ersten Bereich 52 des als Metallplatte ausgebildeten Verbindungselements 24 gebildet ist, verbunden. Das Stromkabel 30 ist an die Stromschiene 28 des Verbindungselements 24 angelötet. Auf einem der Stromschiene 28 gegenüberliegenden Ende des Stromkabels 30 ist das Stromkabel 30 jeweils elektrisch mit den Energiespeicherelementen 14 der Akkuvorrichtung 10 verbunden. Die Stromkabel 30 sind zu einer elektrischen Verbindung der Energiespeicherelemente 14 über die Stromschienen 28 der Verbindungselemente 24 mit den Kontaktelementen 20 vorgesehen.

Es ist jedoch auch denkbar, dass das Stromkabel 30 der Verbindungselemente 24 jeweils von dem Gehäuseelement 12 umspritzt ist und jeweils direkt mit dem Kontaktelement 20 der Kontakteinheit 16 verbindbar ist. Zudem ist es auch denkbar, alternativ oder zusätzlich zu den Verbindungen zwischen Bauteilen durch Anlöten auch Verbindungen zwischen Bauteilen durch Schweißen, Stecken, Crimpen und/oder durch ein anderes, einem Fachmann als sinnvoll erscheinendes Fügeverfahren vorzusehen. Das Verfahren zur Herstellung der Akkuvorrichtung 10 kann auch zusätzliche und/oder alternative, einem Fachmann als sinnvoll erscheinende Verfahrensschritte umfassen.

## Patentansprüche

1. Akkuvorrichtung, insbesondere Handwerkzeugmaschinenakkuvorrichtung, mit einer Gehäuseeinheit (46) mit zumindest einem Gehäuseelement (12), mit zumindest einem Energiespeicherelement (14), das von der Gehäuseeinheit (46) umschlossen ist, mit zumindest einer Kontakteinheit (16) und mit einer Verbindungseinheit (18), die zumindest teilweise dazu vorgesehen ist, zumindest die Kontakteinheit (16) elektrisch mit dem zumindest einen Energiespeicherelement (14) zu verbinden, **dadurch gekennzeichnet, dass** die Kontakteinheit (16) zumindest ein Kontaktelement (20, 22) und die Verbindungseinheit (18) zumindest ein Verbindungselement (24, 26) umfasst, die als getrennt hergestellte, miteinander verbundene Bauteile ausgebildet sind, wobei das zumindest eine Verbindungselement (24, 26) der zumindest einen Verbindungseinheit (18) zumindest teilweise von dem Gehäuseelement (12) umspritzt ausgebildet ist.

2. Akkuvorrichtung nach Anspruch 1, **dadurch gekennzeichnet, dass** sich das zumindest eine Verbindungselement (24, 26) durch das Gehäuseelement (12) hindurch erstreckt.

3. Akkuvorrichtung nach einem der vorhergehenden Ansprüche, **dadurch gekennzeichnet, dass** das zumindest eine Kontaktelement (20, 22) und das zumindest eine Verbindungselement (24, 26) zumindest teilweise elektrisch leitend miteinander verbunden sind.

4. Akkuvorrichtung nach einem der vorhergehenden Ansprüche, **dadurch gekennzeichnet, dass** das zumindest eine Kontaktelement (20, 22) mit einem außerhalb der Gehäuseeinheit (46) liegenden Ende des zumindest einen Verbindungselements (24, 26) verbunden ist.

5. Akkuvorrichtung nach einem der vorhergehenden Ansprüche, **dadurch gekennzeichnet, dass** das zumindest eine Verbindungselement (24) zumindest eine Stromschiene (28) umfasst, die in das zumindest eine Gehäuseelement (12) eingebracht ist.

6. Akkuvorrichtung nach Anspruch 5, **dadurch gekennzeichnet, dass** Seitenkanten der Stromschiene (28) von dem Gehäuseelement (12) derart umspritzt sind, dass eine erste Seitenfläche der Stromschiene (28) in das Innere der Gehäuseeinheit (46) und eine zweite Seitenfläche der Stromschiene (28) nach außen weist.

7. Akkuvorrichtung nach Anspruch 5 oder 6, **dadurch gekennzeichnet, dass** die Stromschiene (28) einen ersten Bereich (52) des zumindest einen Verbindungselements (24) bildet, der eben ausgebildet ist und dessen Haupterstreckungsfläche parallel zu der Haupterstreckungsfläche des Gehäuseelements (12) in einem direkt angrenzenden Bereich verläuft, und das zumindest eine Verbindungselement (24) einen weiteren Bereich (54) aufweist, der eben ausgebildet ist und dessen Haupterstreckungsfläche senkrecht zu der Haupterstreckungsfläche des ersten Bereichs (52) verläuft.

8. Akkuvorrichtung nach einem der vorhergehenden Ansprüche, **dadurch gekennzeichnet, dass** das zumindest eine Verbindungselement (24) zumindest ein Stromkabel (30) umfasst.

9. Akkuvorrichtung nach einem der vorhergehenden Ansprüche, **gekennzeichnet durch** eine Elektronikeinheit (32), die direkt elektrisch leitend mit dem zumindest einen Verbindungselement (26) verbunden ist.

10. Akkuvorrichtung zumindest nach Anspruch 9, **dadurch gekennzeichnet, dass** die Elektronikeinheit (32) zumindest teilweise mit dem zumindest einen Gehäuseelement (12) gekoppelt ist, in das das zumindest eine Verbindungselement (24, 26) zumindest teilweise eingebracht ist.

11. Akkuvorrichtung nach einem der vorhergehenden Ansprüche, **dadurch gekennzeichnet, dass** das zumindest eine Kontaktelement (20, 22) und das zumindest eine Verbindungselement (24, 26) zumindest teilweise stoffschlüssig miteinander verbunden sind.

12. Akkuvorrichtung nach einem der vorhergehenden Ansprüche, **dadurch gekennzeichnet, dass** das zumindest eine Verbindungselement (26) als ebene Metallschiene ausgebildet ist und eine Haupterstreckungsebene aufweist, die senkrecht zu der Haupterstreckungsfläche des Gehäuseelements (12) in einem direkt angrenzenden Bereich verläuft.

13. System mit zumindest einer Akkuvorrichtung (10), insbesondere Handwerkzeugmaschinenakkuvorrichtung, nach einem der vorhergehenden Ansprüche und mit zumindest einer Handwerkzeugmaschine (34), die zumindest einen Aufnahmebereich (36) zu einer Kopplung mit der Akkuvorrichtung (10) aufweist, und/oder mit zumindest einer Ladeeinheit (38), die zumindest einen Aufnahmebereich (40) zu einer Kopplung mit der Akkuvorrichtung (10) umfasst.

14. Verfahren zur Herstellung einer Akkuvorrichtung (10), insbesondere zur Herstellung einer Handwerkzeugmaschinenakkuvorrichtung, nach einem der Ansprüche 1 bis 13 mit einem Verfahrensschritt (42), in dem zumindest ein Verbindungselement (24, 26) einer Verbindungseinheit (18), das zumindest teilweise dazu vorgesehen ist, zumindest ein Kontaktelement (20, 22) einer Kontakteinheit (16) elektrisch mit zumindest einem Energiespeicherelement (14) zu koppeln, von einem Gehäuseelement (12) umspritzt ausgebildet wird, und mit zumindest einem weiteren Verfahrensschritt (44), in dem das zumindest eine Kontaktelement (20, 22) der Kontakteinheit (16) nach dem Einbringen des zumindest einen Verbindungselements (24, 26) der Verbindungseinheit (18) in das zumindest eine Gehäuseelement (12) mit dem zumindest einen Verbindungselement (24, 26) der Verbindungseinheit (18) verbunden wird.

## Claims

1. Battery device, in particular portable power tool battery device, with a housing unit (46) having at least one housing element (12), with at least one energy storage element (14) which is surrounded by the housing unit (46), with at least one contact unit (16) and with a connecting unit (18) which is at least partially provided to connect at least the contact unit (16) electrically to the at least one energy storage element (14), **characterized in that** the contact unit (16) comprises at least one contact element (20, 22) and the connecting unit (18) comprises at least one connecting element (24, 26), which is designed as separately produced, interconnected components, wherein the at least one connecting element (24, 26) of the at least one connecting unit (18) is at least partially formed in a manner encapsulated by the housing element (12) by injection moulding.

2. Battery device according to Claim 1, **characterized in that** the at least one connecting element (24, 26) extends through the housing element (12).

3. Battery device according to either of the preceding claims, **characterized in that** the at least one contact element (20, 22) and the at least one connecting element (24, 26) are at least partially electrically conductively connected to each other.

4. Battery device according to one of the preceding claims, **characterized in that** the at least one contact element (20, 22) is connected to an end of the at least one connecting element (24, 26), which end lies outside the housing unit (46).

5. Battery device according to one of the preceding claims, **characterized in that** the at least one connecting element (24) comprises at least one busbar (28) which is introduced into the at least one housing element (12).

6. Battery device according to Claim 5, **characterized in that** side edges of the busbar (28) are encapsulated by the housing element (12) by injection moulding in such a manner that a first side surface of the busbar (28) faces into the interior of the housing unit (46) and a second side surface of the busbar (28) faces outwards.

7. Battery device according to Claim 5 or 6, **characterized in that** the busbar (28) forms a first region (52) of the at least one connecting element (24), which region is of flat design and the main surface of extent of which runs parallel to the main surface of extent of the housing element (12) in a directly adjacent region, and the at least one connecting element (24) has a further region (54) which is of flat design and the main surface of extent of which runs perpendicularly to the main surface of extent of the first region (52).

8. Battery device according to one of the preceding claims, **characterized in that** the at least one connecting element (24) comprises at least one power cable (30).

9. Battery device according to one of the preceding claims, **characterized by** an electronic unit (32) which is directly electrically conductively connected to the at least one connecting element (26).

10. Battery device at least according to Claim 9, **characterized in that** the electronic unit (32) is at least partially coupled to the at least one housing element (12) into which the at least one connecting element (24, 26) is at least partially introduced.

11. Battery device according to one of the preceding claims, **characterized in that** the at least one contact element (20, 22) and the at least one connecting element (24, 26) are at least partially connected to each other in an integrally bonded manner.

12. Battery device according to one of the preceding claims, **characterized in that** the at least one connecting element (26) is designed as a flat metal rail and has a main plane of extent which runs perpendicularly to the main surface of extent of the housing element (12) in a directly adjacent region.

13. System with at least one battery device (10), in particular a portable power tool battery device, according to one of the preceding claims, and with at least one portable power tool (34) which has at least one receiving region (36) for coupling to the battery device (10), and/or with at least one charging unit (38) which comprises at least one receiving region (40) for coupling to the battery device (10).

14. Method for producing a battery device (10), in particular for producing a portable power tool battery device, according to one of Claims 1 to 13, with a method step (42) in which at least one connecting element (24, 26) of a connecting unit (18), which connecting element is at least partially provided to couple at least one contact element (20, 22) of a contact unit (16) electrically to at least one energy storage element (14), is formed in a manner encapsulated by a housing element (12) by injection moulding, and with at least one further method step (44) in which, after the at least one connecting element (24, 26) of the connecting unit (18) is introduced into the at least one housing element (12), the at least one contact element (20, 22) of the contact unit (16) is connected to the at least one connecting element (24, 26) of the connecting unit (18).

## Revendications

1. Dispositif à accumulateur, notamment dispositif à accumulateur de machine-outil portative, comprenant une unité de boîtier (46) ayant au moins un élément de boîtier (12), comprenant au moins un élément de stockage d'énergie (14) qui est entouré par l'unité de boîtier (46), comprenant au moins une unité de contact (16) et comprenant une unité de liaison (18) qui est au moins partiellement conçue pour relier électriquement au moins l'unité de contact (16) avec l'au moins un élément de stockage d'énergie (14), **caractérisé en ce que** l'unité de contact (16) comporte au moins un élément de contact (20, 22) et l'unité de liaison (18) au moins un élément de liaison (24, 26), lesquels sont réalisés sous la forme d'éléments structuraux fabriqués séparément et reliés entre eux, l'au moins un élément de liaison (24, 26) de l'au moins une unité de liaison (18) étant réalisé au moins partiellement surmoulé par l'élément de boîtier (12).

2. Dispositif à accumulateur selon la revendication 1, **caractérisé en ce que** l'au moins un élément de liaison (24, 26) s'étend à travers l'élément de boîtier (12).

3. Dispositif à accumulateur selon l'une des revendications précédentes, **caractérisé en ce que** l'au moins un élément de contact (20, 22) et l'au moins un élément de liaison (24, 26) sont au moins partiellement reliés entre eux de manière électriquement conductrice.

4. Dispositif à accumulateur selon l'une des revendications précédentes, **caractérisé en ce que** l'au moins un élément de contact (20, 22) est relié à une extrémité de l'au moins un élément de liaison (24, 26) qui se trouve à l'extérieur de l'unité de boîtier (46).

5. Dispositif à accumulateur selon l'une des revendications précédentes, **caractérisé en ce que** l'au moins un élément de liaison (24) comprend au moins une barre-bus (28) qui est logée dans l'au moins un élément de boîtier (12).

6. Dispositif à accumulateur selon la revendication 5, **caractérisé en ce que** les bords latéraux de la barre-bus (28) sont surmoulés par l'élément de boîtier (12) de telle sorte qu'une première surface latérale de la barre-bus (28) est orientée vers l'intérieur de l'unité de boîtier (46) et une deuxième surface latérale de la barre-bus (28) vers l'extérieur.

7. Dispositif à accumulateur selon la revendication 5 ou 6, **caractérisé en ce que** la barre-bus (28) forme une première zone (52) de l'au moins un élément de liaison (24), laquelle est de configuration plane et dont la surface de projection principale s'étend parallèlement à la surface de projection principale de l'élément de boîtier (12) dans une zone directement contigüe, et l'au moins un élément de liaison (24) possède une zone supplémentaire (54) qui est de configuration plane et dont la surface de projection principale s'étend perpendiculairement à la surface de projection principale de la première zone (52).

8. Dispositif à accumulateur selon l'une des revendications précédentes, **caractérisé en ce que** l'au moins un élément de liaison (24) comprend au moins un câble électrique (30).

9. Dispositif à accumulateur selon l'une des revendications précédentes, **caractérisé par** une unité électronique (32) qui est reliée directement de manière électriquement conductrice avec l'au moins un élément de liaison (26).

10. Dispositif à accumulateur au moins selon la revendication 9, **caractérisé en ce que** l'unité électronique (32) est au moins partiellement accouplée à l'au moins un élément de boîtier (12) dans lequel est logé au moins partiellement l'au moins un élément de liaison (24, 26).

11. Dispositif à accumulateur selon l'une des revendications précédentes, **caractérisé en ce que** l'au moins un élément de contact (20, 22) et l'au moins un élément de liaison (24, 26) sont au moins partiellement reliés entre aux par liaison de matières.

12. Dispositif à accumulateur selon l'une des revendications précédentes, **caractérisé en ce que** l'au moins un élément de liaison (26) est réalisé sous la forme d'une barre métallique plane et possède un plan de projection principal qui s'étend perpendiculairement au plan de projection principal de l'élément de boîtier (12) dans une zone directement contigüe.

13. Système comprenant au moins un dispositif à accumulateur (10), notamment un dispositif à accumulateur de machine-outil portative, selon l'une des revendications précédentes, et comprenant au moins une machine-outil portative (34) qui possède au moins une zone d'accueil (36) destinée à un accouplement avec le dispositif à accumulateur (10), et/ou comprenant au moins une unité de charge (38) qui comporte au moins une zone d'accueil (40) destinée à un accouplement avec le dispositif à accumulateur (10).

14. Procédé de fabrication d'un dispositif à accumulateur (10), notamment de fabrication d'un dispositif à accumulateur de machine-outil portative, selon l'une des revendications 1 à 13, comprenant une étape de procédé (42) dans laquelle au moins un élément de liaison (24, 26) d'une unité de liaison (18), qui est au moins partiellement conçue pour relier électriquement au moins un élément de contact (20, 22) d'une unité de contact (16) avec au moins un élément de stockage d'énergie (14), est configuré par surmoulage par un élément de boîtier (12), et comprenant au moins une étape de procédé supplémentaire (44) dans laquelle l'au moins un élément de contact (20, 22) de l'unité de contact (16), après l'introduction de l'au moins un élément de liaison (24, 26) de l'unité de liaison (18) dans l'au moins un élément de boîtier (12), est relié avec l'au moins un élément de liaison (24, 26) de l'unité de liaison (18).
